(19) Europäisches Patentamt

European Patent Office

Office européen des brevets

(11) **EP 2 892 191 A2**

(12) **EUROPEAN PATENT APPLICATION**
published in accordance with Art. 153(4) EPC

(43) Date of publication:
08.07.2015 Bulletin 2015/28

(51) Int Cl.:
*H04L 25/02* (2006.01)

(21) Application number: 13794709.9

(22) Date of filing: 31.07.2013

(86) International application number:
PCT/CN2013/080464

(87) International publication number:
WO 2013/174351 (28.11.2013 Gazette 2013/48)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 28.08.2012 CN 201210310016

(71) Applicant: ZTE Corporation
Shenzhen, Guangdong 518057 (CN)

(72) Inventor: CHEN, Kanhao
Shenzhen
Guangdong 518057 (CN)

(74) Representative: Mozzi, Matteo et al
Jacobacci & Partners S.p.A.
Via Senato, 8
20121 Milano (IT)

(54) **BEAM FORMING METHOD AND DEVICE**

(57) Provided are a beam forming method and device. The method includes: a base station receiving an uplink feedback signal from a terminal, and recovering one or more channel parameters from respective transmitting antennas of the base station to the terminal according to the uplink feedback signal; and the base station adjusting a transmitting phase of a data signal to be transmitted according to the one or more channel parameters from the respective transmitting antennas to the terminal, and forming a beam in a specific direction.

Through the present invention, a base station accurately adjusts a transmitting phase of a data signal to be transmitted according to one or more channel parameters fed back by a terminal, thereby being able to achieve accurate beam forming and locating, and also being able to simplify and even omit the real-time phase calibration of the interior of a device and antenna feeder engineering, achieve a higher beam forming gain for various antenna modes, and facilitate achieving a multilayer multi-user operating mode in an LTE.

a base station receives an uplink feedback signal from a terminal, and recovers one or more channel parameters from respective transmitting antennas of the base station to the terminal according to the uplink feedback signal ⎯ S102

the base station adjusts a transmitting phase of a data signal to be transmitted according to the one or more channel parameters from the respective transmitting antennas to the terminal, and forms a beam in a specific direction ⎯ S104

**Fig. 1**

EP 2 892 191 A2

**Description**

**Technical Field**

The present invention relates to the field of communications, in particular to a beam forming method and device.

**Background**

Currently, the beam forming technology is mainly used for a time division duplex (TDD) system. Because the uplink and the downlink have the same frequency in this system, a base station may use uplink signals received by multiple antennas from a terminal to estimate the orientation of the terminal, and align phases of downlink signals transmitted by these antennas with the terminal so that the downlink signals at the same phase may be superposed after the downlink signals reach the terminal, thereby obtaining a gain much higher than the gain under ordinary power superposition and achieving the effect of beam forming.

However, as regards a frequency division duplex (FDD) system, since the uplink and the downlink have different frequencies and it is necessary to ensure enough gap so as to avoid interference, the channel conditions of the uplink and the downlink usually have a significant difference, therefore, using an uplink channel to estimate a downlink channel may have a significant error, thus leading to poor downlink beam forming effect and the incapability of commercial use.

Therefore, as regards the beam forming of the FDD system, it is usual that the terminal estimates the downlink channel, then the terminal reports downlink channel information to the base station, and the base station adjusts phases of downlink signals transmitted by respective antennas according to the downlink channel information so that the downlink signals at the same phase may be superposed after the downlink signals reach the terminal.

However, the overhead of the uplink feedback in this method is larger and complex. The LTE pre-defines several pre-codes for simplicity. However, this method is rougher, and has higher requirements of antenna design and engineering calibration. During practical applications, this method can hardly obtain a higher beam forming gain and hardly achieve a multilayer multi-user mode proposed by the LTE.

**Summary**

The embodiments of the present invention provide a beam forming method and device so as to at least solve the problems in the related art of the inaccuracy location of downlink beam forming and the strict requirements of antenna design, engineering installation calibration and base station internal calibration.

According to one embodiment of the present invention, a beam forming method is provided, which includes: a base station receiving an uplink feedback signal from a terminal, and recovering one or more channel parameters from respective transmitting antennas of the base station to the terminal according to the uplink feedback signal; and the base station adjusting a transmitting phase of a data signal to be transmitted according to the one or more channel parameters from the respective transmitting antennas to the terminal, and forming a beam in a specific direction.

In an example embodiment, recovering the one or more channel parameters from the respective transmitting antennas of the base station to the terminal according to the uplink feedback signal includes: the base station demodulating the uplink feedback signal on a physical uplink control channel (PUCCH), a sounding reference signal (SRS) or a physical uplink shared channel (PUSCH) to obtain the one or more channel parameters from the respective transmitting antennas to the terminal.

In an example embodiment, the above-mentioned one or more channel parameters are absolute channel phases or one or more relative channel phases, wherein an absolute channel phase is a phase offset of a pilot frequency signal received by the terminal relative to a pilot frequency signal sent by the base station, and a relative channel phase is a phase offset of an absolute channel phase of an antenna of the base station relative to an absolute channel phase of an antenna 0.

In an example embodiment, when the one or more channel parameters are one or more relative channel phases, recovering the one or more channel parameters from the respective transmitting antennas of the base station to the terminal according to the uplink feedback signal includes: the base station demodulating the uplink feedback signal on a PUCCH, SRS or PUSCH, and eliminating a relative phase error to obtain the one or more relative channel phases.

In an example embodiment, before the base station receiving the uplink feedback signal from the terminal, the above-mentioned method further includes: the respective transmitting antennas of the base station transmitting pilot frequency signals to their respective coverage areas in their respective dedicated time frequency locations.

According to another embodiment of the present invention, a beam forming method is provided, which includes: a terminal receiving pilot frequency signals from a base station; the terminal calculating one or more channel parameters from transmitting antennas of the base station to the terminal according to the pilot frequency signals; and the terminal feeding back the one or more channel parameters to the base station, wherein the above-mentioned one or more channel parameters are used for the base station to adjust a transmitting phase of a data signal to be transmitted and to form a beam in a specific direction.

In an example embodiment, the terminal calculating the one or more channel parameters from the transmitting antennas of the base station to the terminal according to the pilot frequency signals includes: the terminal calculating channel responses from the transmitting antennas to the terminal according to the pilot frequency signals transmitted by the base station and pilot frequency signals received by the terminal; and the terminal calculating phases of the channel responses as the one or more channel parameters.

In an example embodiment, the terminal feeding back the one or more channel parameters to the base station includes: the terminal modulating the one or more channel parameters to a PUCCH, SRS or PUSCH; and the terminal feeding back the one or more channel parameters via the PUCCH, SRS or PUSCH carrying the one or more channel parameters.

In an example embodiment, the above-mentioned one or more channel parameters are absolute channel phases or one or more relative channel phases, wherein an absolute channel phase is a phase offset of a pilot frequency signal received by the terminal relative to a pilot frequency signal sent by the base station, and a relative channel phase is a phase offset of an absolute channel phase of an antenna of the base station relative to an absolute channel phase of an antenna 0.

According to one embodiment of the present invention, a beam forming device applied to a base station is provided, which includes: a receiving component, configured to receive an uplink feedback signal from a terminal; a recovery component, configured to recover one or more channel parameters from respective transmitting antennas of the base station to the terminal according to the uplink feedback signal; and a beam forming component, configured to adjust a transmitting phase of a data signal to be transmitted according to the one or more channel parameters from the respective transmitting antennas to the terminal, and form a beam in a specific direction.

In an example embodiment, the recovery component includes: a recovery unit, configured to demodulate the uplink feedback signal on a PUCCH, SRS or PUSCH to obtain the one or more channel parameters from the respective transmitting antennas to the terminal.

In an example embodiment, the above-mentioned device further includes: a transmitting component, configured to transmit pilot frequency signals to their respective coverage areas by the respective transmitting antennas in their respective dedicated time frequency locations.

According to another embodiment of the present invention, a beam forming device applied to a terminal is provided, which includes: a receiving component, configured to receive pilot frequency signals from a base station; a calculation component, configured to calculate one or more channel parameters from transmitting antennas of the base station to the terminal according to the pilot frequency signals; and a feedback component, configured to feed back the one or more channel parameters to the base station, wherein the above-mentioned one or more channel parameters are used for the base station to adjust a transmitting phase of a data signal to be transmitted and to form a beam in a specific direction.

In an example embodiment, the calculation component includes: a first calculation unit, configured to calculate channel responses from the transmitting antennas to the terminal according to pilot frequency signals transmitted by the base station and pilot frequency signals received by the terminal; and a second calculation unit, configured to calculate phases of the channel responses as the one or more channel parameters.

In an example embodiment, the feedback component includes: a modulation unit, configured to modulate the one or more channel parameters to a PUCCH, SRS or PUSCH; and a feedback unit, configured to feed back the one or more channel parameters via the PUCCH, SRS or PUSCH carrying the one or more channel parameters.

Through the present invention, a base station accurately adjusts a transmitting phase of a data signal to be transmitted according to one or more channel parameters fed back by a terminal, thereby being able to achieve accurate beam forming and locating, and also being able to simplify and even omit the real-time phase calibration of the interior of a device and antenna feeder engineering, achieve higher beam forming gain for various antenna modes, and facilitate achieving a multilayer multi-user operating mode in an LTE.

**Brief Description of the Drawings**

Drawings, provided for further understanding of the present invention and forming a part of the specification, are used to explain the present invention together with embodiments of the present invention rather than to limit the present invention. In the drawings:

Fig. 1 is flowchart one showing a beam forming method according to an embodiment of the present invention;
Fig. 2 is structure diagram one showing a beam forming device according to an embodiment of the present invention;
Fig. 3 is flowchart two showing a beam forming method according to an embodiment of the present invention;
Fig. 4 is structure diagram two showing a beam forming device according to an embodiment of the present invention;

Fig. 5 is a flowchart showing a beam forming method of a base station side according to an example embodiment of the present invention;

Fig. 6 is a flowchart showing a beam forming method of a terminal side according to an example embodiment of the present invention;

Fig. 7 is a schematic diagram showing feeding back channel parameters via a PUCCH according to example embodiment 1 of the present invention;

Fig. 8 is a schematic diagram showing feeding back relative channel parameters via a PUCCH according to example embodiment 2 of the present invention;

Fig. 9 is schematic diagram one showing feeding back channel parameters via an SRS according to example embodiment 3 of the present invention;

Fig. 10 is a schematic diagram showing feeding back relative channel parameters via an SRS according to example embodiment 4 of the present invention;

Fig. 11 is schematic diagram two showing feeding back channel parameters via an SRS according to example embodiment 5 of the present invention;

Fig. 12 is a schematic diagram showing feeding back channel parameters via a PUSCH according to example embodiment 6 of the present invention; and

Fig. 13 is a schematic diagram showing feeding back relative channel parameters via a PUSCH according to example embodiment 7 of the present invention.

## Detailed Description of the Embodiments

Note that, the embodiments of the present application and the features of the embodiments can be combined with each other if there is no conflict. The present invention will be explained below with reference to the drawings and in conjunction with the embodiments in detail.

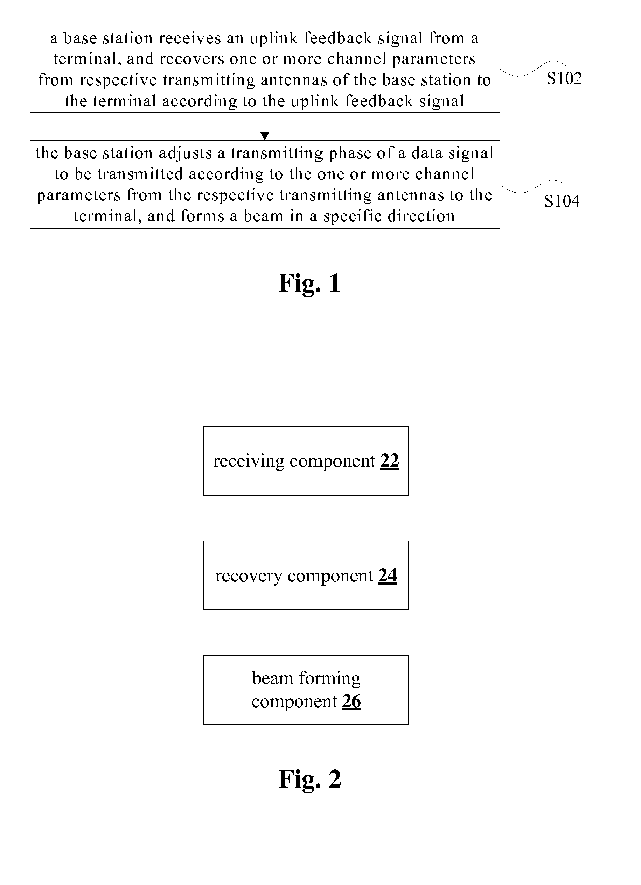

The embodiments of the present invention provide a beam forming method. Fig. 1 is flowchart one of a beam forming method according to an embodiment of the present invention. As shown in Fig. 1, the method includes the following steps S102 and S104.

Step S102, a base station receives an uplink feedback signal from a terminal, and recovers one or more channel parameters from respective transmitting antennas of the base station to the terminal according to the uplink feedback signal.

Step S104, the base station adjusts a transmitting phase of a data signal to be transmitted according to the one or more channel parameters from the respective transmitting antennas to the terminal, and forms a beam in a specific direction.

In the related art, the location of downlink beam forming is inaccurate, and the requirements of antenna design, engineering installation calibration and base station internal calibration are strict. Through the present invention, a base station accurately adjusts a transmitting phase of a data signal to be transmitted according to one or more channel parameters fed back by a terminal, thereby being able to achieve accurate beam forming and locating, and also being able to simplify and even omit the real-time phase calibration of the interior of a device and antenna feeder engineering, achieve higher beam forming gain for various antenna modes, and facilitate achieving a multilayer multi-user operating mode in an LTE.

In an example embodiment, the step of recovering the one or more channel parameters from the respective transmitting antennas of the base station to the terminal according to the uplink feedback signal includes: the base station demodulating the uplink feedback signal on a PUCCH, an SRS or a PUSCH to obtain the one or more channel parameters from the respective transmitting antennas to the terminal.

In an example embodiment, the above-mentioned one or more channel parameters may be absolute channel phases or one or more relative channel phases, wherein an absolute channel phase is a phase offset of a pilot frequency signal received by the terminal relative to a pilot frequency signal sent by the base station, and a relative channel phase is a phase offset of an absolute channel phase of an antenna of the base station relative to an absolute channel phase of an antenna 0. It should be noted that the offset of the absolute channel phase of the antenna 0 relative to the absolute channel phase of the antenna 0 is always 1, and it may not be fed back in practical applications.

When the one or more channel parameters are one or more relative channel phases, the step of recovering the one or more channel parameters from the respective transmitting antennas of the base station to the terminal according to the uplink feedback signal includes: the base station demodulating the uplink feedback signal on a PUCCH, SRS or PUSCH, and eliminating a relative phase error to obtain the one or more relative channel phases.

In practical applications, as regards the absolute channel phase, when the base station demodulates the feedback signal, the one or more channel parameters attached with a certain phase error may be recovered and obtained. However, since the phase errors attached to respective channels are the same, accurate beam forming may not be influenced and there is no need to eliminate the relative (or common) phase error. As regards the relative channel phase, when the base station demodulates the feedback signal, the relative phase error must be eliminated to obtain an original feedback value (i.e., the value calculated by the terminal).

In an example embodiment, before step S102, the above-mentioned method further includes: the respective transmitting antennas of the base station in their respective dedicated time frequency locations transmitting pilot frequency signals to their respective coverage areas.

Corresponding to the beam forming method shown in Fig. 1, the embodiments of the present invention further provide a beam forming device applied to a base station, and the device may be used for realizing the beam forming method shown in Fig. 1. Fig. 2 is structure diagram one of a beam forming device according to an embodiment of the present invention. As shown in Fig. 2, the device includes a receiving component **22,** a recovery component **24** and a beam forming component **26.** The structure thereof is described in detail below.

The receiving component **22** is configured to receive an uplink feedback signal from a terminal; the recovery component **24** is connected to the receiving component **22** and is configured to recover one or more channel parameters from respective transmitting antennas of the base station to the terminal according to the uplink feedback signal received by the receiving component **22;** and the beam forming component **26** is connected to the recovery component **24** and is configured to adjust a transmitting phase of a data signal to be transmitted according to the one or more channel parameters from the respective transmitting antennas to the terminal, and form a beam in a specific direction.

In an example embodiment, the recovery component **24** includes: a recovery unit, configured to demodulate the uplink feedback signal on a PUCCH, an SRS or a PUSCH to obtain the one or more channel parameters from the respective transmitting antennas to the terminal.

In an example embodiment, the above-mentioned device further includes: a transmitting component, configured to be the respective transmitting antennas in their respective dedicated time frequency locations transmitting pilot frequency signals to their respective coverage areas.

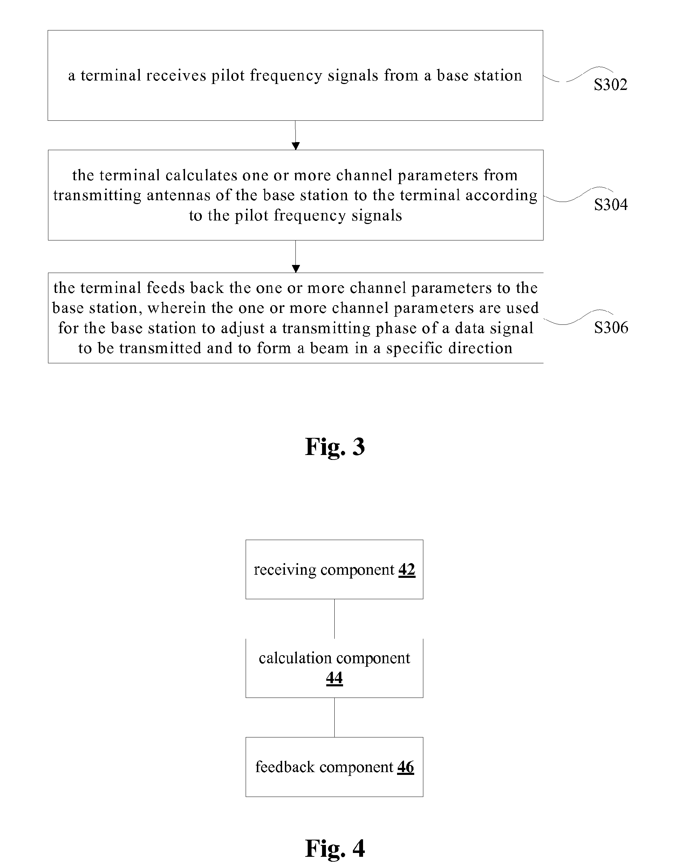

The embodiments of the present invention further provide a beam forming method. Fig. 3 is flowchart two of a beam forming method according to an embodiment of the present invention. As shown in Fig. 3, the method includes the following steps S302-S306.

Step S302, a terminal receives pilot frequency signals from a base station.

Step S304, the terminal calculates one or more channel parameters from transmitting antennas of the base station to the terminal according to the pilot frequency signals.

Step S306, the terminal feeds back the one or more channel parameters to the base station, wherein the one or more channel parameters are used for the base station to adjust a transmitting phase of a data signal to be transmitted and to form a beam in a specific direction.

In an example embodiment, step S304 includes: the terminal calculating channel responses from the transmitting antennas to the terminal according to a pilot frequency signals transmitted by the base station and pilot frequency signals received by the terminal; and the terminal calculating phases of the channel responses as the one or more channel parameters.

Step S306 includes: the terminal modulating the one or more channel parameters to a PUCCH, an SRS or a PUSCH; and the terminal feeding back the one or more channel parameters via the PUCCH, SRS or PUSCH carrying the one or more channel parameters.

In practice, the terminal continuously cooperates with the base station for phase calibration, and this phase calibration is integrated calibration from a base station baseband to a base station antenna and then to a terminal antenna, and thus the base station need not perform alone calibration on an external antenna feeder system. Since the base station need not predict the downlink according to the uplink, the phase calibration of the receiving and transmitting loop inside the base station may also be omitted.

The above-mentioned one or more channel parameters can be absolute channel phases or one or more relative channel phases, wherein an absolute channel phase is a phase offset of a pilot frequency signal received by the terminal relative to a pilot frequency signal sent by the base station, and a relative channel phase is a phase offset of an absolute channel phase of an antenna of the base station relative to an absolute channel phase of an antenna 0. It should be noted that the offset of the absolute channel phase of the antenna 0 relative to the absolute channel phase of the antenna 0 is always 1, and it may not be fed back in practical applications.

Corresponding to the beam forming method shown in Fig. 3, the embodiments of the present invention further provide a beam forming device applied to a terminal. The device may be used for realizing the beam forming method shown in Fig. 3. Fig. 4 is structure diagram two of a beam forming device according to an embodiment of the present invention. As shown in Fig. 4, the device includes a receiving component **42,** a calculation component **44** and a feedback component **46.** The structure thereof is described in detail below.

The receiving component **42** is configured to receive pilot frequency signals from a base station; the calculation component **44** is connected to the receiving component **42** and is configured to calculate one or more channel parameters from transmitting antennas of the base station to the terminal according to the pilot frequency signals; and the feedback component **46** is connected to the calculation component **44** and is configured to feed back the one or more channel parameters to the base station, wherein the one or more channel parameters are used for the base station to adjust a transmitting phase of a data signal to be transmitted and to form a beam in a specific direction.

In an example embodiment, the calculation component **44** includes: a first calculation unit, configured to calculate channel responses from the transmitting antennas to the terminal according to pilot frequency signals transmitted by the base station and pilot frequency signals received by the terminal; and a second calculation unit, connected to the first calculation unit and configured to calculate phases of the channel responses as the one or more channel parameters.

In an example embodiment, the feedback component **46** includes: a modulation unit, configured to modulate the one or more channel parameters to a PUCCH, an SRS or a PUSCH; and a feedback unit, connected to the modulation unit and configured to feed back the one or more channel parameters via the PUCCH, SRS or PUSCH carrying the one or more channel parameters.

In an example embodiment, the above-mentioned channel parameter is an absolute channel phase or a relative channel phase.

It should be noted that the beam forming device described in the device embodiments corresponds to the above-mentioned method embodiments, with the specific implementation described in the method embodiment in detail, thereby needing no further description.

In another example embodiment, the base station and the terminal can also use the following components to realize the above-mentioned beam forming method.

A base station side includes a pilot frequency transmitting component (realizing the function of the above-mentioned transmitting component), a downlink channel parameter recovery component (realizing the function of the above-mentioned recovery component **24**) and a beam forming component (realizing the function of the above-mentioned beam forming component **26**). A terminal side includes a pilot frequency detection component (realizing the function of the above-mentioned receiving component **42**), a downlink channel parameter generation component (realizing the function of the above-mentioned calculation component **44**) and a downlink channel parameter transfer component (realizing the function of the above-mentioned feedback component **46**). The downlink channel parameter recovery component and the downlink channel parameter transfer component are creative parts of the present example embodiment, and the function of each component is described below in detail in combination with the process of beam forming.

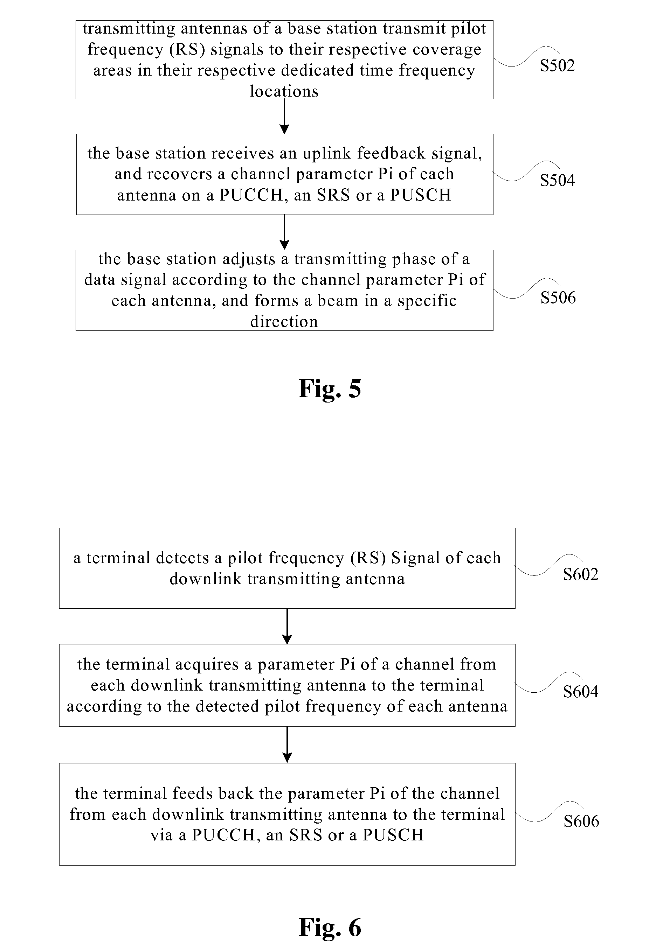

Fig. 5 is a flowchart of a base station side of a beam forming method according to an example embodiment of the present invention. As shown in Fig. 5, the method includes the following steps.

Step S502, transmitting antennas of a base station transmit pilot frequency (RS) signals to their respective coverage areas in their respective dedicated time frequency locations.

Step S504, the base station receives an uplink feedback signal, and recovers a channel parameter Pi of each antenna on a PUCCH, an SRS or a PUSCH.

Step S506, the base station adjusts a transmitting phase of a data signal according to the channel parameter Pi of each antenna, and forms a beam in a specific direction.

Thus, in the above-mentioned process, the pilot frequency transmitting component of the base station sends pilot frequencies to the coverage range. The downlink channel parameter recovery component of the base station recovers downlink channel phase information from the PUCCH, SRS or PUSCH, and sends the downlink channel phase information to the beam forming component of the base station so as to control the beam direction of the base station transmitting data.

Fig. 6 is a flowchart of a beam forming method at a terminal side according to an example embodiment of the present invention. As shown in Fig. 6, the method includes the following steps.

Step S602, a terminal detects a pilot frequency (RS) Signal of each downlink transmitting antenna.

Step S604, the terminal acquires a parameter Pi of a channel from each downlink transmitting antenna to the terminal according to the detected pilot frequency of each antenna.

Step S606, the terminal feeds back the parameter Pi of the channel from each downlink transmitting antenna to the terminal via a PUCCH, an SRS or a PUSCH.

Thus, in the above-mentioned process, the pilot frequency detection component of the terminal detects the pilot frequency signals and sends the detected pilot frequencies to the downlink channel parameter generation component for processing; the downlink channel parameter generation component obtains one or more downlink channel phase parameters in the form of complex number after processing, and sends the one or more parameters to the downlink channel parameter transfer component; and the downlink channel parameter transfer component modulates the phase parameter of each channel to the PUCCH, SRS or PUSCH for phase feedback.

As the above-mentioned circulation, in practice, the terminal continuously cooperates with the base station for phase calibration in this process. This phase calibration is integrated calibration from a base station baseband to a base station antenna and then to a terminal antenna, and thus the base station need not perform alone calibration on an external antenna feeder system. Since the base station need not predict the downlink according to the uplink, the phase calibration of the receiving and transmitting loop inside the base station may also be omitted. In addition, since the base station performs accurate adjustment according to the phase information fed back by the terminal, basically, the strongest beam may be formed in any direction expected by the terminal with regard to any type of antenna, and there is a larger selection range of the type of the antenna. It may contribute to achieving multilayer multi-user only if the beam is not formed in other directions.

It can be seen from the above-mentioned description that the above-mentioned beam forming method overcomes the problems in the related art of the inaccuracy location of downlink beam forming and large uplink overhead, overcomes the defects of strict antenna design, engineering installation calibration and base station internal calibration in the related art, may achieve accurate beam forming and locating, may simplify and even omit the real-time phase calibration of the interior of a device and antenna feeder engineering, achieves higher beam forming gain for various antenna modes, and facilitates achieving a multilayer multi-user operating mode of an LTE. The above-mentioned beam forming method may either be applied to an FDD system or a TDD system, and weakens the demand of the TDD system for the receiving and transmitting loop phase error calibration.

To make the technical solutions and implementation methods of the present invention more clear, the implementation process thereof is described below in detail in combination with the example embodiments.

As regards a terminal side, pilot frequencies transmitted by four downlink antennas are respectively set as $RS_0$, $RS_1$, $RS_2$ and $RS_3$ (the terminal already knows the transmitted pilot frequencies), four pilot frequency signals received by the terminal are respectively set as $R_{RS0}$, $R_{RS1}$, $R_{RS2}$ and $R_{RS3}$, and channel responses from four downlink transmitting antennas to a terminal receiving antenna are respectively set as $h_0$, $h_1$, $h_2$ and $h_3$. Thus,

$$|R_{RS0} \quad R_{RS1} \quad R_{RS2} \quad R_{RS3}| = |h_0 RS_0 \quad h_1 RS_1 \quad h_2 RS_2 \quad h_3 RS_3|$$

Therefore, the terminal may obtain the channel response of each downlink transmitting antenna as:

$$|h_0 \quad h_1 \quad h_2 \quad h_3| = |R_{RS0}/RS_0 \quad R_{RS1}/RS_1 \quad R_{RS2}/RS_2 \quad R_{RS3}/RS_3|$$

Then, a phase (i.e., an absolute channel phase) of each channel response $h_i$ is calculated and is marked as $P_i$, and each channel parameter $P_i$ may be obtained as:

$$|P_0 \quad P_1 \quad P_2 \quad P_3| = |h_0/|h_0| \quad h_1/|h_1| \quad h_2/|h_2| \quad h_3/|h_3||$$

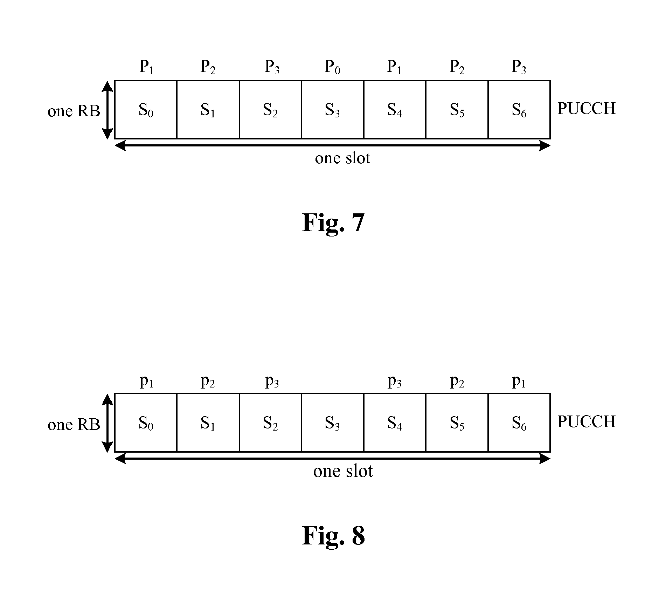

Afterwards, the terminal needs to feed back the channel parameter information. The specific feedback manner may be a modulation to a PUCCH, an SRS or a PUSCH, and detailed description is provided below with reference to Fig. 7 to Fig. 13. In the following example embodiments, an absolute channel phase is called as a channel parameter and a relative channel phase is called as a relative channel parameter.

Example embodiment 1

The present example embodiment describes modulating measured channel parameters $P_0$-$P_3$ to a PUCCH. As shown in Fig. 7, the PUCCH is composed of seven symbols of one Resource Block (RB), each RB has 12 sub-carriers, and a reference signal of each Resource Element (RE) meets the requirements of section 5.5.2.2 of the Long-Term Evolution (LTE) specification 36.211. A terminal modulates a channel parameter $P_0$ to sub-carriers (twelve) to which a middle symbol $S_3$ belongs, modulates a channel parameter $P_1$ to the sub-carriers to which symbols $S_0$ and $S_4$ belong, modulates a channel parameter $P_2$ to the sub-carriers to which symbols $S_1$ and $S_5$ belong, and modulates a channel parameter $P_3$ to the sub-carriers to which symbols $S_2$ and $S_6$ belong, and then the terminal performs uplink feedback on the PUCCH carrying channel parameter information.

Example embodiment 2

The present example embodiment describes modulating relative channel parameters $p_1$-$p_3$ to a PUCCH. A terminal firstly obtains relative channel parameters $p_i$ by using the following formula: $|p_1 \; p_2 \; p_3| = |P_1/P_0 \; P_2/P_0 \; P_3/P_0|$

As shown in Fig. 8, the terminal modulates a relative channel parameter $p_1$ to sub-carriers to which symbols $S_0$ and $S_6$ belong, modulates a relative channel parameter $p_2$ to the sub-carriers to which symbols $S_1$ and $S_5$ belong, and modulates a relative channel parameter $p_3$ to the sub-carriers to which symbols $S_2$ and $S_4$ belong, and then the terminal performs uplink feedback on the PUCCH carrying relative channel parameter information.

Example embodiment 3

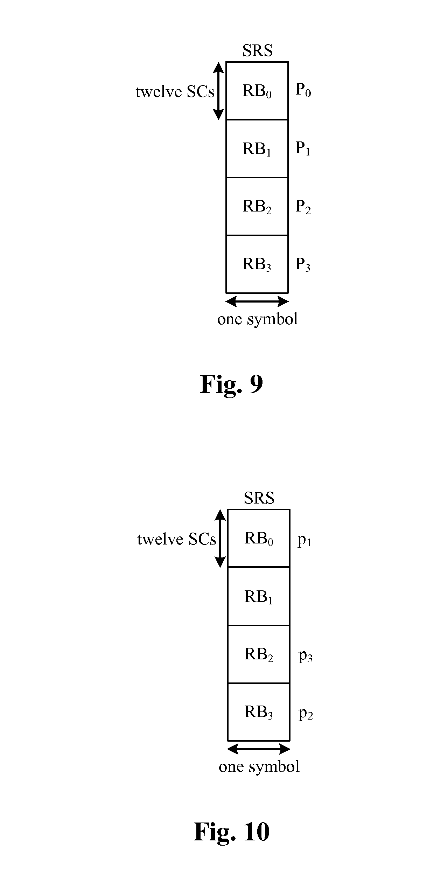

The present example embodiment describes modulating measured channel parameters $P_0$-$P_3$ to an SRS. As shown in Fig. 9, the SRS is composed of the same symbol of four RBs (each RB has 12 sub-carriers), and a reference signal of each resource element (RE) meets the requirements of section 5.5.3 of the LTE specification 36.211. A terminal modulates a channel parameter $P_0$ to 12 sub-carriers (SC) of $RB_0$, modulates a channel parameter $P_1$ to 12 sub-carriers of $RB_1$, modulates a channel parameter $P_2$ to 12 sub-carriers of $RB_2$, and modulates a channel parameter $P_3$ to 12 sub-carriers of $RB_3$, and then the terminal performs uplink feedback on the SRS carrying channel parameter information.

Example embodiment 4

The present example embodiment describes modulating relative channel parameters $p_1$-$p_3$ to an SRS. A terminal firstly obtains a relative channel parameter $p_i$ by using the following formula: $|p_1\ p_2\ p_3| = |P_1/P_0\ P_2/P_0\ P_3/P_0|$
As shown in Fig. 10, the terminal modulates a relative channel parameter $p_1$ to 12 sub-carriers of $RB_0$, modulates a relative channel parameter $p_2$ to 12 sub-carriers of $RB_3$, and modulates a channel parameter $p_3$ to 12 sub-carriers of $RB_2$, and then the terminal performs uplink feedback on the SRS carrying channel parameter information.

Example embodiment 5

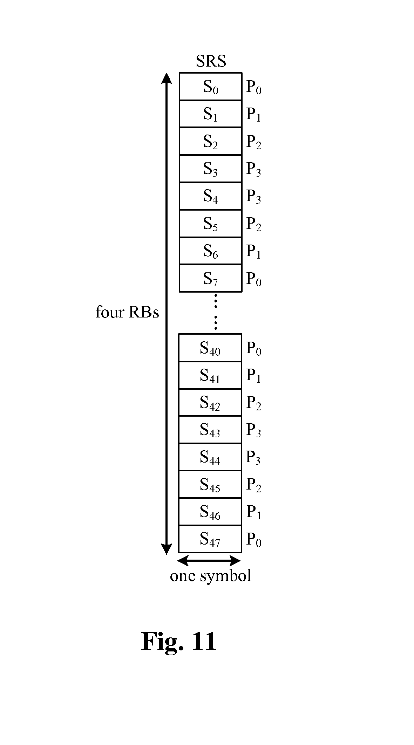

The present example embodiment describes modulating measured channel parameters $P_0$-$P_3$ to an SRS. As shown in Fig. 11, a terminal modulates a channel parameter $P_0$ to sub-carriers 0, 7, 8, 15, 16, 23, 24, 31, 32, 39, 40 and 47, modulates a channel parameter $P_1$ to sub-carriers 1, 6, 9, 14, 17, 22, 25, 30, 33, 38, 41 and 46, modulates a channel parameter $P_2$ to sub-carriers 2, 5, 10, 13, 18, 21, 26, 29, 34, 37, 42 and 45, and modulates a channel parameter $P_3$ to sub-carriers 3, 4, 11, 12, 19, 20, 27, 28, 35, 36, 43 and 44, and then the terminal performs uplink feedback on the SRS carrying channel parameter information.

Example embodiment 6

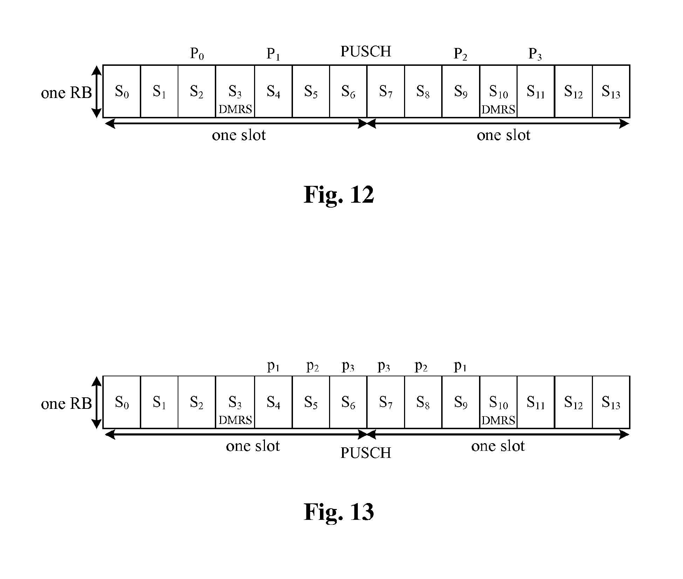

The present example embodiment describes modulating measured channel parameters $P_0$-$P_3$ to a PUSCH. As shown in Fig. 12, the PUSCH is composed of 14 symbols of one RB (12 sub-carriers). A Demodulated Reference Signal (DMRS) is on symbols $S_3$ and $S_{10}$. A terminal modulates a channel parameter $P_0$ to 12 sub-carriers of $S_2$ (which may also copy a DMRS to the 12 sub-carriers simultaneously), modulates a channel parameter $P_1$ to 12 sub-carriers of $S_4$ (which may also copy a DMRS to the 12 sub-carriers simultaneously), modulates a channel parameter $P_2$ to 12 sub-carriers of $S_9$ (which may also copy a DMRS to the 12 sub-carriers simultaneously), and modulates a channel parameter $P_3$ to 12 sub-carriers of $S_{11}$ (which may also copy a DMRS to the 12 sub-carriers simultaneously), and then the terminal performs uplink feedback on the PUSCH carrying channel parameter information.

Example embodiment 7

The present example embodiment describes modulating relative channel parameters $p_1$-$p_3$ to a PUSCH. A terminal firstly obtains a relative channel parameter $p_i$ by using the following formula: $|p_1\ p_2\ p_3| = |P_1/P_0\ P_2/P_0\ P_3/P_0|$
As shown in Fig. 13, the terminal modulates a relative channel parameter $p_1$ to 12 sub-carriers of $S_4$ and $S_9$ (which may also copy a DMRS to the sub-carriers simultaneously), modulates a relative channel parameter $p_2$ to 12 sub-carriers of $S_5$ and $S_8$ (which may also copy a DMRS to the sub-carriers simultaneously), and modulates a relative channel parameter $p_3$ to 12 sub-carriers of $S_6$ and $S_7$ (which may also copy a DMRS to the sub-carriers simultaneously), and then the terminal performs uplink feedback on the PUSCH carrying channel parameter information.
As stated in the above-mentioned example embodiments, the terminal may have a lower overhead, achieving the delivery of channel parameters.
At a base station side, each antenna of the base station always sends a reference signal into a coverage range thereof so as to help each user to judge a channel parameter of each antenna of the base station. Then, the base station receives channel parameter information fed back by the uplink on a PUCCH, an SRS or a PUSCH, and recovers the channel parameter of each antenna so as to perform beam forming. With regard to different uplink modulation manners in the above-mentioned example embodiments, different recovery methods are needed, which are respectively introduced below.

Demodulation of example embodiment 1:

The time offset of an uplink signal received by a base station is set as ∆t, and the frequency offset thereof is

set as $\Delta\omega$. The time interval between symbols is set as T, a carrier frequency is set as $\omega$, and an uplink channel response is set as h (since multiple uplink receiving antennas usually use Maximal Radio Combining (MRC), channel responses of respective receiving antennas may be combined into a channel response of one antenna for simplicity). Thus, each symbol $S_i$ of a sub-carrier $\omega$ of a PUCCH received by the base station after a pilot frequency is eliminated can be written as:

$$S_0 = P_1 \left[ h \cdot \exp(j\omega \cdot \Delta t) \right]$$

$$S_1 = P_2 \left[ h \cdot \exp(j\omega \cdot \Delta t + j\Delta\omega \cdot T) \right]$$

$$S_2 = P_3 \left[ h \cdot \exp(j\omega \cdot \Delta t + j\Delta\omega \cdot 2T) \right]$$

$$S_3 = P_0 \left[ h \cdot \exp(j\omega \cdot \Delta t + j\Delta\omega \cdot 3T) \right]$$

$$S_4 = P_1 \left[ h \cdot \exp(j\omega \cdot \Delta t + j\Delta\omega \cdot 4T) \right]$$

$$S_5 = P_2 \left[ h \cdot \exp(j\omega \cdot \Delta t + j\Delta\omega \cdot 5T) \right]$$

$$S_6 = P_3 \left[ h \cdot \exp(j\omega \cdot \Delta t + j\Delta\omega \cdot 6T) \right]$$

Therefore, a downlink channel parameter $P_i$ attached with a certain phase error may be recovered and obtained as follows:

$$P_0 \left[ h \cdot \exp\left( j\omega \cdot \Delta t + j\Delta\omega \cdot 3T \right) \right] = S_3$$

$$P_1 \left[ h \cdot \exp\left( j\omega \cdot \Delta t + j\Delta\omega \cdot 3T \right) \right] = S_4^{3/4} \cdot S_0^{1/4}$$

$$P_2 \left[ h \cdot \exp\left( j\omega \cdot \Delta t + j\Delta\omega \cdot 3T \right) \right] = S_5^{1/2} \cdot S_1^{1/2}$$

$$P_3 \left[ h \cdot \exp\left( j\omega \cdot \Delta t + j\Delta\omega \cdot 3T \right) \right] = S_6^{1/4} \cdot S_2^{3/4}$$

Since the phase errors attached to respective channel parameters $P_i$ are the same, accurate beam forming may not be influenced (see the following description of beam forming).

Demodulation of example embodiment 2:

The time offset of an uplink signal received by a base station is set as $\Delta t$, and the frequency offset thereof is set as $\Delta\omega$. The time interval between symbols is set as T, a carrier frequency is set as $\omega$, and an uplink channel response is set as h. Thus, each symbol $S_i$ of a sub-carrier $\omega$ of a PUCCH received by the base station after a pilot frequency is eliminated may be written as:

$$S_0 = p_1 \left[ h \cdot \exp(j\omega \cdot \Delta t) \right]$$

$$S_1 = p_2 \left[ h \cdot \exp(j\omega \cdot \Delta t + j\Delta\omega \cdot T) \right]$$

$$S_2 = p_3 \left[ h \cdot \exp(j\omega \cdot \Delta t + j\Delta\omega \cdot 2T) \right]$$

$$S_3 = h \cdot \exp(j\omega \cdot \Delta t + j\Delta\omega \cdot 3T)$$

$$S_4 = p_3 \left[ h \cdot \exp(j\omega \cdot \Delta t + j\Delta\omega \cdot 4T) \right]$$

$$S_5 = p_2 \left[ h \cdot \exp(j\omega \cdot \Delta t + j\Delta\omega \cdot 5T) \right]$$

$$S_6 = p_1 \left[ h \cdot \exp(j\omega \cdot \Delta t + j\Delta\omega \cdot 6T) \right]$$

Therefore, a downlink relative channel parameter $p_i$ may be recovered and obtained:

$$p_1 = S_0^{1/2} \cdot S_6^{1/2} / S_3$$

$$p_2 = S_1^{1/2} \cdot S_5^{1/2} / S_3$$

$$p_3 = S_2^{1/2} \cdot S_4^{1/2} / S_3$$

The demodulation of the downlink relative channel parameter $p_i$ should recover an accurate value, and can not be attached with a phase error.

Demodulation of example embodiment 3:

The time offset of an uplink signal received by a base station is set as $\Delta t$, each sub-carrier frequency interval is set as $\omega$, and an uplink channel response is set as h (since each sub-carrier of an SRS is on the same symbol, phase shifts caused by a frequency offset are the same for each sub-carrier, therefore, the frequency offset may be ignored or the phase shifts caused by the frequency offset are regarded as a part of the uplink channel response h). Thus, each sub-carrier $S_i$ of the SRS received by the base station after a pilot frequency is eliminated may be written as:

$$S_i = P_{\lfloor i/12 \rfloor} \left[ h \cdot \exp(ij\omega \cdot \Delta t) \right] \; (i = 0 \sim 47)$$

Therefore, a downlink channel parameter $P_i$ attached with a certain phase error may be recovered and obtained:

$$P_0 \{ h \cdot [\exp(12j\omega \cdot \Delta t) - 1] / [\exp(j\omega \cdot \Delta t) - 1] \} = \sum_{i=0}^{11} S_i$$

$$P_1 \{ h \cdot [\exp(12j\omega \cdot \Delta t) - 1] / [\exp(j\omega \cdot \Delta t) - 1] \} = (\sum_{i=12}^{23} S_i) \cdot [(\prod_{i=12}^{17} S_i) / (\prod_{i=18}^{23} S_i)]^{1/3}$$

$$P_2 \{ h \cdot [\exp(12j\omega \cdot \Delta t) - 1] / [\exp(j\omega \cdot \Delta t) - 1] \} = (\sum_{i=24}^{35} S_i) \cdot [(\prod_{i=24}^{29} S_i) / (\prod_{i=30}^{35} S_i)]^{2/3}$$

$$P_3 \{ h \cdot [\exp(12j\omega \cdot \Delta t) - 1] / [\exp(j\omega \cdot \Delta t) - 1] \} = (\sum_{i=36}^{47} S_i) \cdot (\prod_{i=36}^{41} S_i) / (\prod_{i=42}^{47} S_i)$$

Demodulation of example embodiment 4:

The time offset of an uplink signal received by a base station is set as $\Delta t$, each sub-carrier frequency interval is set as $\omega$, and an uplink channel response is set as h. Thus, each sub-carrier $S_i$ of the SRS received by the base station after a pilot frequency is eliminated may be written as:

$$S_i = p_1 \left[ h \cdot \exp(ji\omega \cdot \Delta t) \right] \ (i = 0 \sim 11)$$

$$S_i = h \cdot \exp(ji\omega \cdot \Delta t) \ (i = 12 \sim 23)$$

$$S_i = p_3 \left[ h \cdot \exp(ji\omega \cdot \Delta t) \right] \ (i = 24 \sim 35)$$

$$S_i = p_2 \left[ h \cdot \exp(ji\omega \cdot \Delta t) \right] \ (i = 36 \sim 47)$$

Therefore, a downlink relative channel parameter $p_i$ may be recovered and obtained:

$$p_1 = \frac{\sum_0^{11} S_i}{\sum_{12}^{23} S_i} \left[ \frac{\prod_6^{11} S_i}{\prod_0^5 S_i} \right]^{1/3}$$

$$p_2 = \frac{\sum_{36}^{47} S_i}{\sum_{12}^{23} S_i} \left[ \frac{\prod_{36}^{41} S_i}{\prod_{42}^{47} S_i} \right]^{2/3}$$

$$p_3 = \frac{\sum_{24}^{35} S_i}{\sum_{12}^{23} S_i} \left[ \frac{\prod_{24}^{29} S_i}{\prod_{30}^{35} S_i} \right]^{1/3}$$

Demodulation of example embodiment 5:

The time offset of an uplink signal received by a base station is set as $\Delta t$, and the frequency offset thereof is set as $\Delta \omega$. Each sub-carrier frequency interval is set as $\omega$, and an uplink channel response is set as h. Thus, each sub-carrier $S_{8i+n}$ (i = 0~6, n = 0~7) of the SRS received by the base station after a pilot frequency is eliminated may be written as:

$$S_{8i} = P_0 \left[ h \cdot \exp(8ij\omega \cdot \Delta t) \right]$$

$$S_{8i+1} = P_1 \left[ h \cdot \exp((8i+1)j\omega \cdot \Delta t) \right]$$

$$S_{8i+2} = P_2 \left[ h \cdot \exp((8i+2)j\omega \cdot \Delta t) \right]$$

$$S_{8i+3} = P_3 \left[ h \cdot \exp((8i+3)j\omega \cdot \Delta t) \right]$$

$$S_{8i+4} = P_3 \left[ h \cdot \exp((8i+4)j\omega \cdot \Delta t) \right]$$

$$S_{8i+5} = P_2 \left[ h \cdot \exp((8i+5)j\omega \cdot \Delta t) \right]$$

$$S_{8i+6} = P_1 \left[ h \cdot \exp((8i+6)j\omega \cdot \Delta t) \right]$$

$$S_{8i+7} = P_0 \left[ h \cdot \exp((8i+7)j\omega \cdot \Delta t) \right]$$

Therefore, a downlink channel parameter $P_i$ attached with a certain phase error may be recovered and obtained:

$$P_0 \left[ h \cdot \exp((8i+7/2)j\omega \cdot \Delta t) \right] = (S_{8i+7}S_{8i})^{1/2}$$

$$P_1 \left[ h \cdot \exp((8i+7/2)j\omega \cdot \Delta t) \right] = (S_{8i+6}S_{8i+1})^{1/2}$$

$$P_2 \left[ h \cdot \exp((8i+7/2)j\omega \cdot \Delta t) \right] = (S_{8i+5}S_{8i+2})^{1/2}$$

$$P_3 \left[ h \cdot \exp((8i+7/2)j\omega \cdot \Delta t) \right] = (S_{8i+4}S_{8i+3})^{1/2}$$

Demodulation of example embodiment 6:

The time offset of an uplink signal received by a base station is set as $\Delta t$, and the frequency offset thereof is set as $\Delta\omega$. The time interval between symbols in the same slot is set as T, a time interval of two pilot frequency symbols $(S_3, S_{10})$ is set as T', a carrier frequency is set as $\omega$, and an uplink channel response is set as h. Thus, each symbol $S_i$ of a sub-carrier $\omega$ of a PUSCH received by the base station after a pilot frequency is eliminated may be written as:

$$S_2 = P_0(h \cdot \exp(j\omega \cdot \Delta t - j\Delta\omega \cdot T))$$

$$S_3 = h \cdot \exp(j\omega \cdot \Delta t)$$

$$S_4 = P_1(h \cdot \exp(j\omega \cdot \Delta t + j\Delta\omega \cdot T))$$

$$S_9 = P_2(h \cdot \exp(j\omega \cdot \Delta t + j\Delta\omega \cdot (T'-T)))$$

$$S_{10} = h \cdot \exp(j\omega \cdot \Delta t + j\Delta\omega \cdot T')$$

$$S_{11} = P_3(h \cdot \exp(j\omega \cdot \Delta t + j\Delta\omega \cdot (T'+T)))$$

Furthermore, according to the protocol:

$$T' = 15360 \text{ sampling points}$$

$$T = 2192 \text{ sampling points}$$

It is recorded as k = T/T', and a downlink channel parameter $P_i$ attached with a certain phase error may be recovered and obtained:

$$P_0(h \cdot \exp(j\omega \cdot \Delta t)) = S_2 \cdot (S_{10}/S_3)^k$$

$$P_1(h \cdot \exp(j\omega \cdot \Delta t)) = S_4 \cdot (S_3/S_{10})^k$$

$$P_2(h \cdot \exp(j\omega \cdot \Delta t)) = S_9 \cdot (S_{10}/S_3)^{k-1}$$

$$P_3(h \cdot \exp(j\omega \cdot \Delta t)) = S_{11} \cdot (S_3/S_{10})^{k+1}$$

Demodulation of example embodiment 7:

The time offset of an uplink signal received by a base station is set as $\Delta t$, and the frequency offset thereof is set as $\Delta\omega$. The time interval between symbols in the same slot is set as T, a time interval of two pilot frequency symbols $(S_3, S_{10})$ is set as T', a carrier frequency is set as $\omega$, and an uplink channel response is set as h. Thus, each symbol $S_i$ of a sub-carrier $\omega$ of a PUSCH received by the base station after a pilot frequency is eliminated may be written as:

$$S_3 = h \cdot \exp(j\omega \cdot \Delta t)$$

$$S_4 = p_1 \cdot h \cdot \exp(j\omega \cdot \Delta t + j\Delta\omega \cdot T)$$

$$S_5 = p_2 \cdot h \cdot \exp(j\omega \cdot \Delta t + j\Delta\omega \cdot 2T)$$

$$S_6 = p_3 \cdot h \cdot \exp(j\omega \cdot \Delta t + j\Delta\omega \cdot 3T)$$

$$S_7 = p_3 \cdot h \cdot \exp\left[j\omega \cdot \Delta t + j\Delta\omega \cdot (T'\text{-}3T)\right]$$

$$S_8 = p_2 \cdot h \cdot \exp\left[j\omega \cdot \Delta t + j\Delta\omega \cdot (T'\text{-}2T)\right]$$

$$S_9 = p_1 \cdot h \cdot \exp\left[j\omega \cdot \Delta t + j\Delta\omega \cdot (T'\text{-}T)\right]$$

$$S_{10} = h \cdot \exp(j\omega \cdot \Delta t + j\Delta\omega \cdot T')$$

Therefore, a downlink relative channel parameter $p_i$ may be recovered and obtained:

$$p_1 = \left(S_4 \cdot S_9\right)^{\frac{1}{2}} \Big/ \left(S_3 \cdot S_{10}\right)^{\frac{1}{2}}$$

$$p_2 = \left(S_5 \cdot S_8\right)^{\frac{1}{2}} \Big/ \left(S_3 \cdot S_{10}\right)^{\frac{1}{2}}$$

$$p_3 = \left(S_6 \cdot S_7\right)^{\frac{1}{2}} \Big/ \left(S_3 \cdot S_{10}\right)^{\frac{1}{2}}$$

After the base station obtains a downlink channel parameter $P_i$ of each antenna attached with a certain phase error, the relative channel parameter $p_i$ may be calculated by reducing a common phase error (example embodiments 2, 4 and 7 may skip this step) to obtain

$$p_i = P_i / P_0, \left(i = 1 \sim 3\right)$$

Then, a conjugate value of the relative channel parameter $p_i$ is used to form transmitting data x of the corresponding antenna to obtain the actual transmitting data of various antennae:

$$\begin{vmatrix} x \\ p_1^* x \\ p_2^* x \\ p_3^* x \end{vmatrix}$$

A signal formed after the transmitting data of each antenna passes a downlink channel $|h_0\ h_1\ h_2\ h_3|$ and reaches a terminal antenna is

$$\begin{vmatrix} h_0 & h_1 & h_2 & h_3 \end{vmatrix} \cdot \begin{vmatrix} x \\ p_1^* x \\ p_2^* x \\ p_3^* x \end{vmatrix} = (|h_0| + |h_1| + |h_2| + |h_3|)P_0 x$$

Therefore, the maximum transmitting gain may be obtained at the terminal.

As stated above, the phase error caused by a time offset or a frequency offset mainly needs to be solved when demodulating. If it is necessary to further improve the demodulation accuracy of a channel parameter or improve a signal coverage range, aside from enabling a terminal to improve a transmitting power and to improve a transmitting frequency (e.g., continuously transmitting by using multiple subframes, or transmitting by using multiple PUCCHs/SRSs/PUSCHs), a base station may be made to perform cumulation average on a received feedback signal by using a certain weight value, because as regards the scene applicable to beam forming, the channel parameter has little change. Furthermore, as regards a near-end user, the transmitting power or transmitting frequency may be reduced, and the number of sub-carriers of a PUSCH occupied by channel parameter information is even reduced so as to increase data transmission. These measures may further improve the practicability of the embodiments of the present invention. In addition, since the receiving of a feedback signal by a base station in the method of the present invention may be combined. As the increase of the number of base station antennas, it is easier for the embodiments of the present invention to balance the uplink and downlink with respect to a traditional TDD base station using a method of an uplink channel estimating a downlink channel.

It should be noted that the steps shown in the flowchart of the drawings may be executed, for example, in a computer system with a set of instructions executable by a computer, in addition, a logic order is shown in the flowchart, but the shown or described steps may be executed in a different order under some conditions.

In summary, according to the above-mentioned embodiments of the present invention, a beam forming method and device is provided. Through the present invention, a base station accurately adjusts a transmitting phase of a data signal to be transmitted according to channel parameters fed back by a terminal, thereby being able to achieve accurate beam forming and locating, and also being able to simplify and even omit the real-time phase calibration of the interior of a device and antenna feeder engineering, achieve higher beam forming gain for various antenna modes, and facilitate achieving a multilayer multi-user operating mode of an LTE.

Obviously, those skilled in the art shall understand that the above-mentioned components and steps of the present invention may be realized by using general purpose calculating device, may be integrated in one calculating device or distributed on a network which consists of a plurality of calculating devices. Alternatively, the components and the steps of the present invention may be realized by using the executable program code of the calculating device. Consequently, they may be stored in the storing device and executed by the calculating device, or they are made into integrated circuit component respectively, or a plurality of components or steps thereof are made into one integrated circuit component. In this way, the present invention is not restricted to any particular hardware and software combination.

The descriptions above are only the example embodiment of the present invention, which are not used to restrict the present invention, for those skilled in the art; the present invention may have various changes and variations. Any modification, equivalent replacement, or improvement made within the principle of the present invention shall all fall within the protection scope of the present invention.

## Claims

1. A beam forming method, **characterized by** comprising:

   a base station receiving an uplink feedback signal from a terminal, and recovering one or more channel parameters from respective transmitting antennas of the base station to the terminal according to the uplink feedback signal; and
   the base station adjusting a transmitting phase of a data signal to be transmitted according to the one or more channel parameters from the respective transmitting antennas to the terminal, and forming a beam in a specific direction.

2. The method according to claim 1, **characterized in that** recovering the one or more channel parameters from the respective transmitting antennas of the base station to the terminal according to the uplink feedback signal comprises:

   the base station demodulating the uplink feedback signal on a Physical Uplink Control Channel (PUCCH), a Sounding Reference Signal (SRS) or a Physical Uplink Shared Channel (PUSCH) to obtain the one or more channel parameters from the respective transmitting antennas to the terminal.

3. The method according to claim 1 or 2, **characterized in that** the one or more channel parameters are absolute channel phases or one or more relative channel phases, wherein an absolute channel phase is a phase offset of a pilot frequency signal received by the terminal relative to a pilot frequency signal sent by the base station, and a relative channel phase is a phase offset of an absolute channel phase of an antenna of the base station relative to an absolute channel phase of an antenna 0.

4. The method according to claim 3, **characterized in that** when the one or more channel parameters are one or more relative channel phases, recovering the one or more channel parameters from the respective transmitting antennas of the base station to the terminal according to the uplink feedback signal comprises:

   the base station demodulating the uplink feedback signal on a PUCCH, SRS or PUSCH, and eliminating a relative phase error to obtain the one or more relative channel phases.

5. The method according to claim 1, **characterized in that** before the base station receiving the uplink feedback signal from the terminal, the method further comprises:

   the respective transmitting antennas of the base station transmitting pilot frequency signals to their respective coverage areas in their respective dedicated time frequency locations.

6. A beam forming method, **characterized by** comprising:

   a terminal receiving pilot frequency signals from a base station;
   the terminal calculating one or more channel parameters from transmitting antennas of the base station to the terminal according to the pilot frequency signals; and

the terminal feeding back the one or more channel parameters to the base station, wherein the one or more channel parameters are used for the base station to adjust a transmitting phase of a data signal to be transmitted and to form a beam in a specific direction.

7. The method according to claim 6, **characterized in that** the terminal calculating the one or more channel parameters from the transmitting antennas of the base station to the terminal according to the pilot frequency signals comprises:

the terminal calculating channel responses from the transmitting antennas to the terminal according to the pilot frequency signals transmitted by the base station and pilot frequency signals received by the terminal; and
the terminal calculating phases of the channel responses as the one or more channel parameters.

8. The method according to claim 6, **characterized in that** the terminal feeding back the one or more channel parameters to the base station comprises:

the terminal modulating the one or more channel parameters to a Physical Uplink Control Channel (PUCCH), a Sounding Reference Signal (SRS) or a Physical Uplink Shared Channel (PUSCH); and
the terminal feeding back the one or more channel parameters via the PUCCH, SRS or PUSCH carrying the one or more channel parameters.

9. The method according to any one of claims 6 to 8, **characterized in that** the one or more channel parameters are absolute channel phases or one or more relative channel phases, wherein an absolute channel phase is a phase offset of a pilot frequency signal received by the terminal relative to a pilot frequency signal sent by the base station, and a relative channel phase is a phase offset of an absolute channel phase of an antenna of the base station relative to an absolute channel phase of an antenna 0.

10. A beam forming device applied to a base station, **characterized by** comprising:

a receiving component, configured to receive an uplink feedback signal from a terminal;
a recovery component, configured to recover one or more channel parameters from respective transmitting antennas of the base station to the terminal according to the uplink feedback signal; and
a beam forming component, configured to adjust a transmitting phase of a data signal to be transmitted according to the one or more channel parameters from the respective transmitting antennas to the terminal, and form a beam in a specific direction.

11. The device according to claim 10, **characterized in that** the recovery component comprises:

a recovery unit, configured to demodulate the uplink feedback signal on a Physical Uplink Control Channel (PUCCH), a Sounding Reference Signal (SRS) or a Physical Uplink Shared Channel (PUSCH) to obtain the one or more channel parameters from the respective transmitting antennas to the terminal.

12. The device according to claim 10, **characterized in that** the device further comprises:

a transmitting component, configured to transmit pilot frequency signals to their respective coverage areas by the respective transmitting antennas in their respective dedicated time frequency locations.

13. A beam forming device applied to a terminal, **characterized by** comprising:

a receiving component, configured to receive pilot frequency signals from a base station;
a calculation component, configured to calculate one or more channel parameters from transmitting antennas of the base station to the terminal according to the pilot frequency signals; and
a feedback component, configured to feed back the one or more channel parameters to the base station, wherein the one or more channel parameters are used for the base station to adjust a transmitting phase of a data signal to be transmitted and to form a beam in a specific direction.

14. The device according to claim 13, **characterized in that** the calculation component comprises:

a first calculation unit, configured to calculate channel responses from the transmitting antennas to the terminal according to the pilot frequency signals transmitted by the base station and pilot frequency signals received by the terminal; and

a second calculation unit, configured to calculate phases of the channel responses as the one or more channel parameters.

15. The device according to claim 13, **characterized in that** the feedback component comprises:

a modulation unit, configured to modulate the one or more channel parameters to a Physical Uplink Control Channel (PUCCH), a Sounding Reference Signal (SRS) or a Physical Uplink Shared Channel (PUSCH); and a feedback unit, configured to feed back the one or more channel parameters via the PUCCH, SRS or PUSCH carrying the one or more channel parameters.

a base station receives an uplink feedback signal from a terminal, and recovers one or more channel parameters from respective transmitting antennas of the base station to the terminal according to the uplink feedback signal — S102

the base station adjusts a transmitting phase of a data signal to be transmitted according to the one or more channel parameters from the respective transmitting antennas to the terminal, and forms a beam in a specific direction — S104

**Fig. 1**

receiving component **22**

recovery component **24**

beam forming component **26**

**Fig. 2**

a terminal receives pilot frequency signals from a base station — S302

the terminal calculates one or more channel parameters from transmitting antennas of the base station to the terminal according to the pilot frequency signals — S304

the terminal feeds back the one or more channel parameters to the base station, wherein the one or more channel parameters are used for the base station to adjust a transmitting phase of a data signal to be transmitted and to form a beam in a specific direction — S306

**Fig. 3**

receiving component **42**

calculation component **44**

feedback component **46**

**Fig. 4**

transmitting antennas of a base station transmit pilot frequency (RS) signals to their respective coverage areas in their respective dedicated time frequency locations — S502

the base station receives an uplink feedback signal, and recovers a channel parameter Pi of each antenna on a PUCCH, an SRS or a PUSCH — S504

the base station adjusts a transmitting phase of a data signal according to the channel parameter Pi of each antenna, and forms a beam in a specific direction — S506

**Fig. 5**

a terminal detects a pilot frequency (RS) Signal of each downlink transmitting antenna — S602

the terminal acquires a parameter Pi of a channel from each downlink transmitting antenna to the terminal according to the detected pilot frequency of each antenna — S604

the terminal feeds back the parameter Pi of the channel from each downlink transmitting antenna to the terminal via a PUCCH, an SRS or a PUSCH — S606

**Fig. 6**

| $P_1$ | $P_2$ | $P_3$ | $P_0$ | $P_1$ | $P_2$ | $P_3$ |
|-------|-------|-------|-------|-------|-------|-------|
| $S_0$ | $S_1$ | $S_2$ | $S_3$ | $S_4$ | $S_5$ | $S_6$ |

one RB

one slot

PUCCH

**Fig. 7**

| $p_1$ | $p_2$ | $p_3$ | | $p_3$ | $p_2$ | $p_1$ |
|-------|-------|-------|-------|-------|-------|-------|
| $S_0$ | $S_1$ | $S_2$ | $S_3$ | $S_4$ | $S_5$ | $S_6$ |

one RB

one slot

PUCCH

**Fig. 8**

SRS

twelve SCs

| | |
|---|---|
| RB$_0$ | P$_0$ |
| RB$_1$ | P$_1$ |
| RB$_2$ | P$_2$ |
| RB$_3$ | P$_3$ |

one symbol

**Fig. 9**

SRS

twelve SCs

| | |
|---|---|
| RB$_0$ | p$_1$ |
| RB$_1$ | |
| RB$_2$ | p$_3$ |
| RB$_3$ | p$_2$ |

one symbol

**Fig. 10**

SRS

| | |
|---|---|
| $S_0$ | $P_0$ |
| $S_1$ | $P_1$ |
| $S_2$ | $P_2$ |
| $S_3$ | $P_3$ |
| $S_4$ | $P_3$ |
| $S_5$ | $P_2$ |
| $S_6$ | $P_1$ |
| $S_7$ | $P_0$ |

four RBs

| | |
|---|---|
| $S_{40}$ | $P_0$ |
| $S_{41}$ | $P_1$ |
| $S_{42}$ | $P_2$ |
| $S_{43}$ | $P_3$ |
| $S_{44}$ | $P_3$ |
| $S_{45}$ | $P_2$ |
| $S_{46}$ | $P_1$ |
| $S_{47}$ | $P_0$ |

one symbol

# Fig. 11

**Fig. 12**

**Fig. 13**